Europäisches Patentamt

European Patent Office

Office européen des brevets

(11) Veröffentlichungsnummer: **0 491 303 A2**

# (12) EUROPÄISCHE PATENTANMELDUNG

(21) Anmeldenummer: **91121437.7**

(22) Anmeldetag: **13.12.91**

(51) Int. Cl.⁵: **G05B 19/407**

(30) Priorität: **19.12.90 DE 4040764**

(43) Veröffentlichungstag der Anmeldung:
**24.06.92 Patentblatt 92/26**

(84) Benannte Vertragsstaaten:
**AT BE CH DE FR GB IT LI LU NL**

(71) Anmelder: **Weiler Werkzeugmaschinen GmbH & Co. KG**
**Würzburger Strasse 17**
**W-8522 Herzogenaurach(DE)**

(72) Erfinder: **Rösch, Friedrich, Dipl.-Ing. (FH)**
**Laufamholzstrasse 197**
**W-8500 Nürnberg 30(DE)**

(74) Vertreter: **Bohnenberger, Johannes, Dr. et al**
**Meissner, Bolte & Partner**
**Widenmayerstrasse 48**
**W-8000 München 22(DE)**

(54) **Einrichtung zum Abschalten eines Vorschubs bei einer konventionellen Drehmaschine oder Fräse.**

(57) Es sind konventionelle Drehmaschinen oder Fräsen bekannt, bei denen der Antriebsmotor über eine steuerbare Kupplung (9), insbesondere eine Fallschnecke (12/13) mit einer Spindel (15) koppelbar ist, die einen Werkzeugschlitten (16) bewegt. Hierbei sind Meßeinrichtungen (17, 18) vorgesehen, die den vom Werkzeugschlitten (16) zurückgelegten Istweg messen und mit einem eingegebenen Sollweg vergleichen. Die Kupplung (9) wird dann ausgerückt, wenn der Istweg dem Sollweg entspricht. Um ein Hinausfahren über den Sollweg wirksam zu verhindern, andererseits aber diesen Sollweg möglichst exakt zu erreichen, wird eine Abschaltsteuerung (20) vorgeschlagen, die einen Geschwindigkeitsdetektor zum Feststellen der Vorschubgeschwindigkeit des Werkzeugschlittens und eine Vorgabeeinrichtung umfaßt, welche derart ausgebildet ist, daß die Kupplung eine durch einen Vorgabeumwandler (22) in Abhängigkeit von der Vorschubgeschwindigkeit festgelegte Nachlaufstrecke vor Erreichen des Sollwegs ausgerückt wird.

EP 0 491 303 A2

Die Erfindung betrifft eine Einrichtung zum Abschalten eines Vorschubs bei einer konventionellen Drehmaschine oder Fräse nach dem Oberbegriff des Patentanspruches 1 sowie ein entsprechendes Verfahren.

Bei konventionellen Drehmaschinen oder Fräsen wurde früher die Position der Werkzeugschlitten durch einfache, optisch ablesbare Skalen festgestellt. Um die Genauigkeit der Ablesung zu verbessern und das Ablesen selbst zu erleichtern, sind bei moderneren Maschinen digitale Positionsanzeigen vorgesehen. Bei konventionellen Drehmaschinen werden z. B. derartige digitale Positionsanzeigen an Bett-, Plan- und Oberschlitten eingesetzt. Hierbei sind optische oder magnetische Meßeinrichtungen am Schlitten und an der Führung vorgesehen, über welche die absolute oder die relative Position der Schlitten mittels einer Ziffernanzeige oder eines Bildschirms anzeigbar sind.

Die Bedienungsperson nutzt diese Zähler in der Weise, daß sie eine bestimmte Wegstrecke vorgibt und diese Strecke rückwärts zählend bis auf "Null" abfährt. Der Nulldurchgang hat also die Bedeutung "Soll-Maß erreicht".

Eine gewisse "Automatisierung", die insbesondere zur Verringerung der Nebenzeiten dienen soll, ist nun dadurch erreichbar, daß die (üblicherweise vorhandene) Fallschnecke beim Nulldurchgang ausgerückt wird, so daß die Vorschubbewegung der Maschine gestoppt wird. Bedingt durch die Massenträgheit der bewegten Teile und verschiedene Totzeiten vergeht jedoch eine gewisse Zeit (Nachlaufzeit), bis der jeweilige Schlitten tatsächlich stillsteht. Hieraus ergibt sich somit ein Nachlaufweg, der berücksichtigt werden muß, will man auf eine exakte Endposition kommen. Um diese exakte Endposition nun zu erreichen, hat bisher die Bedienungsperson ein geringfügig kleineres Nennmaß eingestellt, um sicherzustellen, daß der Sollweg nicht überschritten wurde. Gegebenenfalls übrigbleibende Differenzen zum Sollweg wurden dann von Hand abgearbeitet. Irrt sich aber die Bedienungsperson, so wird der Sollweg überschritten, so daß das Werkstück unbrauchbar ist. Bei einem zu großen Fehler kann es sogar passieren, daß das Schneidwerkzeug in ein Werkzeugteil (z. B. das Spannfutter) hineinfährt, so daß noch größere Schäden vorliegen.

Der Erfindung liegt die Aufgabe zugrunde, eine Einrichtung der eingangs genannten Art dahingehend weiterzubilden, daß eine erhöhte Sicherheit auf einfache Weise erreicht wird.

Diese Aufgabe wird in überraschend einfacher Weise durch die kennzeichnenden Merkmale des Anspruches 1 gelöst.

Ein wesentlicher Gedanke der Erfindung liegt darin, daß keine, von der Bedienungsperson einzugebende Abschätzung vorgenommen, sondern vielmehr eine Nachlaufstrecke in Abhängigkeit von der (tatsächlichen) Vorschubgeschwindigkeit festgelegt wird und vor Erreichen des so modifizierten Sollweges der Vorschub abgeschaltet wird.

Vorzugsweise ist hierfür ein Vorgabeumwandler vorgesehen, der die Nachlaufstrecke über einen Proportionalitätsfaktor mit der Vorschubgeschwindigkeit verknüpft. Dieser Proportionalitätsfaktor ist in erster Linie maschinenabhängig und wird im Vorgabeumwandler gespeichert. Die Genauigkeit kann dadurch erhöht werden, daß der Proportionalitätsfaktor in mehreren Stufen abhängig von der Vorschubgeschwindigkeit eingestellt wird. Diese Einstellung erfolgt zur Erleichterung der Bedienung selbsttätig.

Der Proportionalitätsfaktor kann entweder von der Bedienungsperson entsprechend der gewählten Vorschubgeschwindigkeit eingegeben werden, oder aber während des aktuellen Bearbeitungsvorgangs aus der gemessenen Vorschubgeschwindigkeit (erste Ableitung des Vorschubweges nach der Zeit) festgestellt werden.

Zur Festlegung des Proportionalitätsfaktors bzw. zur Erarbeitung der Kurve (Tabelle) für die Nachlaufstrecke, die eine Funktion der Vorschubgeschwindigkeit ist, können Probeläufe gefahren und die daraus resultierenden Meßwerte gespeichert werden. Ein derartiges "Lernverfahren" ist auch durch die Bedienungsperson durchführbar. Hierbei ist es möglich, entweder in einem reinen Probelauf, also ohne gleichzeitige Bearbeitung eines Werkstücks die Werte festzulegen. Bei einer anderen Ausführungsform der Erfindung wird der Bearbeitungsvorgang nach Erreichen der eingestellten Vorschubgeschwindigkeit (dies ist daran zu erkennen, daß die Vorschubgeschwindigkeit sich nicht mehr ändert) abgestoppt (der Vorschub wird abgeschaltet), aus dem zwischen Abschalten und tatsächlichem Stillstand des Vorschubs wird der Proportionalitätsfaktor errechnet und danach wird der Bearbeitungsfortgang fortgesetzt (gegebenenfalls wird hierzu das Werkzeug eine kurze Wegstrecke zurückgefahren, bevor das Werkzeug mit der gewählten Vorschubgeschwindigkeit wieder in die gewählte Vorschubrichtung in Gang gesetzt wird). Selbstverständlich muß ein solcher Lernvorgang für jede Geschwindigkeit dann nur ein einziges Mal durchgeführt werden, wenn die resultierenden Werte über einen längeren Zeitraum speicherbar sind (RAM) und die Maschinenparameter im wesentlichen unverändert bleiben. Lediglich dann, wenn ein außergewöhnlich schweres Werkzeug gegen ein sehr leichtes (oder umgekehrt) ausgetauscht wird, muß der Proportionalitätsfaktor eventuell korrigiert werden.

Vorzugsweise ist eine Notabschalteinrichtung vorgesehen, die derart ausgebildet ist, daß dann, wenn eine definierten Zeitdauer nach Erreichen des Sollwegs der Vorschub weiter in Betrieb ist, der Hauptmotor der Maschine abgeschaltet wird. Es wird hier also in ein anderes System eingegriffen, indem nicht die mechanische Verbindung zwischen Antriebsmotor und Spindel, sondern der Motor selbst abgeschaltet wird. Durch diese Redundanz wird eine erhöhte Sicherheit gewonnen, so daß auch im Falle einer Fehlfunktion der Fallschnecke bzw. des auslösenden dazugehörigen Organs größere Schäden am Werkstück bzw. Schäden an der Maschine mit erhöhter Sicherheit vermieden werden können.

In einem ersten Fall kann die Notabschaltung ein Verzögerungsglied umfassen, das dann, wenn der Istweg dem Sollweg entspricht, zu laufen beginnt und bei Ablauf einer festgestellten Verzögerungszeit in den Antriebsmotor abschaltet. Bei dieser Ausführungsform der Erfindung "verläßt" man sich also darauf, daß der Istweg korrekt gemessen und der Vergleich mit dem Sollweg korrekt durchgeführt wird.

Bei einer anderen Ausführungsform der Erfindung umfaßt die Notabschalteinrichtung eine gesonderte Vorschubabtasteinrichtung, die unabhängig von der eingangs erwähnten Meßeinrichtung eine Bewegung des Werkzeugschlittens feststellt. Der Antriebsmotor wird dann abgeschaltet, wenn dann, wenn der Istweg dem Sollweg bereits entsprochen hat, das Endmaß also erreicht ist, immer noch eine Vorschubbewegung vorliegt. Zur Bewegungsabtastung kann hier ein einfacher Drehkodierer (Drehmelder) eingesetzt werden, der feststellt, ob sich die zu einem Vorschub gehörige Spindel noch dreht oder nicht. In diesem Fall kann die Notabschalteinrichtung einen Notabschaltrechner umfassen, der mit der Vorschubabtasteinrichtung und der Eingabeeinrichtung verbunden und derart ausgebildet ist, daß aus der Bewegungsgeschwindigkeit des Werkzeugschlittens und dem eingegebenen Sollweg eine Maximal-Vorschubzeitdauer errechnet wird. Der Antriebsmotor wird dann abgeschaltet, wenn die Vorschubabtasteinrichtung nach Ablauf der Maximalvorschubdauer noch eine Bewegung des Werkzeugschlittens (bzw. Drehung der Werkzeugspindel) feststellt. Dieses System ist also praktisch völlig unabhängig sowohl von der Vergleichseinrichtung (Istwert mit Sollwert) als auch der dazugehörigen Weg-Meßeinrichtung.

Bevorzugte Ausführungsformen der Erfindung ergeben sich aus den Unteransprüchen und der nachfolgenden Beschreibung von Ausführungsbeispielen, die anhand von Abbildungen näher erläutert werden. Hierbei zeigen:

Fig. 1 eine erste bevorzugte Ausführungsform der Erfindung in schematitisierter Blockdarstellung;

Fig. 2 eine zweite Ausführungsform der Erfindung, die gegenüber der nach Fig. 1 durch ein Notabschaltsystem vervollständigt ist, und

Fig. 3 eine dritte bevorzugte Ausführungsform der Erfindung, die sich von der nach Fig. 2 durch eine andere Ausbildungsweise des Notabschaltsystems unterscheidet.

In der nachfolgenden Beschreibung werden für gleiche und gleich wirkende Teile dieselben Bezugsziffern verwendet.

Eine konventionelle Drehmaschine (oder Fräse) umfaßt üblicherweise einen Antriebsmotor 10, der über ein Getriebe 11 und eine Kopplung 9 mit einer Spindel 15 verbunden ist, die einen Werzeugschlitten 16 bei Drehung verschiebt.

Die Kupplung 9 umfaßt eine verschwenkbare Fallschnecke 12, die in der eingerückten Position der Kupplung 9 mit einem Schnekkenrad 13 in Eingriff steht und in dieser Position gehalten ist. Ein Auslöseelement 14 ist vorgesehen, das eine Bewegung der Fallschnecke 12 fort vom Schnekkenrad 13 ermöglicht, so daß dann die Kupplung 9 ausgerückt ist.

Am Führungsbett (nicht gezeigt) der Maschine ist ein Maßstab 17 angebracht, der mittels eines (optischen oder magnetischen) Meßfühlers 18 abtastbar ist, welcher am Werkzeugschlitten 16 montiert ist.

Die Ausgangssignale des Meßfühlers 18 werden einer Abschaltsteuerung 20 zugeführt. Die Abschaltsteuerung 20 umfaßt einen Zähler 23, dem die Ausgangssignale des Meßfühlers 18 zugeführt werden. Der Zähler 23 weist einen Eingang auf, der mit einer Eingabetastatur 26 in Verbindung steht. Über die Eingabetastatur 26 ist in den Zähler 23 ein Vorgabewert eingebbar, welcher dem vorbestimmten Sollweg entspricht.

Die Ausgangssignale des Meßfühlers 18 werden weiterhin dem Eingang eines Geschwindigkeitsdetektors 21 zugeführt, dessen Ausgangssignal in seiner Amplitude (bzw. seinem Digitalwert) der Geschwindigkeit des Schlittens 16 entspricht.

Der Geschwindigkeitswert wird einem Vorgabeumwandler 22 zugeführt, der aus dem Geschwindigkeitswert über weiter unten beschriebene Operationen einen Vorgabewert errechnet, der so bemessen ist, daß dann, wenn die Kupplung 9 um diesen Vorgabewert vor Erreichen des Sollwertes ausgerückt wird, die Bewegung des Schlittens 16 zu diesem Zeitpunkt tatsächlich beendet ist.

Der Vorgabewert aus dem Vorgabeumwandler 22 wird einem Eingang eines Komparators 24 zugeführt, dessen anderem Eingang der momentane Stand des Zählers 23 zugeführt wird. Wenn die Daten an beiden Eingängen übereinstimmen, gibt der Komparator 24 ein Ausgangssignal ab, welches dem Auslöseelement 24 zugeführt wird und dieses derart ansteuert, daß die Fallschnecke 12 außer Eingriff mit dem Schneckenrad 13 gebracht wird, so daß die Kupplung 9 ausgerückt ist.

Zur Überwachung wird der Zählerstand aus dem Zähler 23 weiterhin einer Anzeigeeinheit 25 zugeführt.

Die Funktion ist nun derart, daß die Bedienungsperson zu Beginn den Werkzeugschlitten 16 in eine Ausgangsposition bringt, von der aus ein Sollweg zurückgelegt werden soll. Der Sollweg wird über die Tastatur 26 eingegeben. Danach wird der Vorschub (durch manuelles Einrücken der Kupplung 9) in Gang gesetzt.

Sobald der Schlitten 16 sich bewegt, gibt der Meßfühler 18 Ausgangssignale (eine definierte Anzahl von Impulsen pro Wegstreckeneinheit) ab, welche den Inhalt des Zählers 23 vermindern. Der Zähler 23 zählt also rückwärts.

Die Ausgangsimpulse des Meßfühlers 18 werden weiterhin im Geschwindigkeitsdetektor 21 in ein geschwindigkeitsproportionales Signal umgewandelt, was bei der oben beschriebenen Ausführungsform z. B. über eine Frequenz/Spannungs-Wandlung geschehen kann.

Aus dem geschwindigkeitsproportionalen Signal bildet der Vorgabeumwandler 22 einen Vorgabewert, der einer Wegstrecke in derselben Einheit entspricht, wie sie im Zähler 23 für die Einstellung der Weckstrecke verwendet wird. Diese Wegstrecke steht also am einen Eingang des Komparators 24 an.

Wenn nun der Zähler 23 bis zu einem Wert herabgezählt hat, welcher der Vorgabewegstrecke entspricht, diese beiden Werte also gleich sind, so wird die Fallschnecke 12 mittels des Auslöseelementes 14 ausgelöst, und die Spindel 15 stoppt ab. Da dieser Abstoppvorgang aufgrund der bewegten Massen eine gewisse Zeit in Anspruch nimmt, läuft der Werkzeugschlitten 16 über den Vorgabewert hinaus und kommt beim eingestellten Sollwert zur Ruhe.

Um dies sicher zu gewährleisten, ist im Vorgabeumwandler 22 ein maschinenabhängiger Proportionalwert (Parameter) gespeichert, mit welchem die tatsächliche Geschwindigkeit des Werkzeugschlittens 16 multipliziert wird.

Da die Nachlaufstrecke, also die Wegstrecke, über welche sich der Schlitten 16 nach Ausrücken der Kupplung 9 noch weiterbewegt, nur näherungsweise direkt (linear) proportional zur Vorschubgeschwindigkeit ist, sind im Vorgabeumwandler 22 mehrere (im allgemeinen genügen zwei) Proportionalwerte gespeichert, die voneinander verschieden sind und je nach tatsächlicher Geschwindigkeit mit dieser Geschwindigkeit multipliziert werden. Dies entspricht sozusagen einer linearen Approximation einer gekrümmten Kurve.

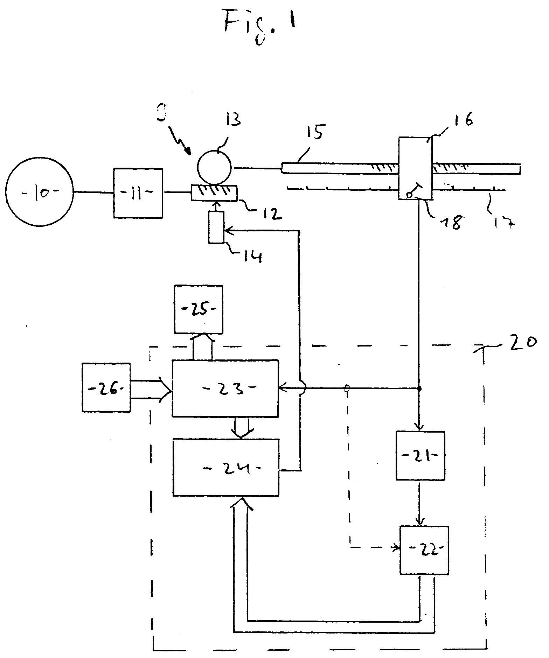

Der zu einer Maschine gehörige Proportionalwert kann nun im Werk ermittelt und fest in den Vorgabeumwandler 22 einprogrammiert werden. Bei einer anderen bevorzugten Ausführungsform der Erfindung wird dem Vorgabeumwandler 22 nicht nur das geschwindigkeitsproportionale Signal aus dem Geschwindigkeitsdetektor 21, sondern auch das weg-proportionale Signal aus dem Meßfühler 18 zugeführt (unterbrochene Verbindung in Fig. 1). Mit dieser Anordnung kann nun vom Anwender selbst der zu einer bestimmten Vorschubgeschwindigkeit des Werkzeugschlittens 16 gehörige Proportionalwert in einem Probelauf ermittelt werden, wobei man den Schlitten 16 über eine gewisse Strecke mit der interessierenden Geschwindigkeit laufen und dann anhalten läßt und dabei den Weg mißt, der nach dem Auslösen der Kupplung 9 noch zurückgelegt wird. Aus diesem Wert ist dann der zur betreffenden Geschwindigkeit gehörige Proportionalwert errechenbar. Es ist aber auch möglich, anstelle eines Probelaufes einen tatsächlichen (ersten) Bearbeitungsvorgang mit einem Zwischenstop durchzuführen (nach dem Stop wird der Nachlauf gemessen und der Proportionalwert errechnet), wobei man zur Erzielung eines fehlerfreien Wiederanlaufes eine Steuerung vorsieht, die derart ausgebildet ist, daß der Werkzeugschlitten 16 eine definierte Wegstrecke entgegen der eigentlichen Vorschubrichtung zurückgefahren wird, bevor die Kupplung 9 zur Beendigung des Bearbeitungsvorgangs wieder eingerückt wird.

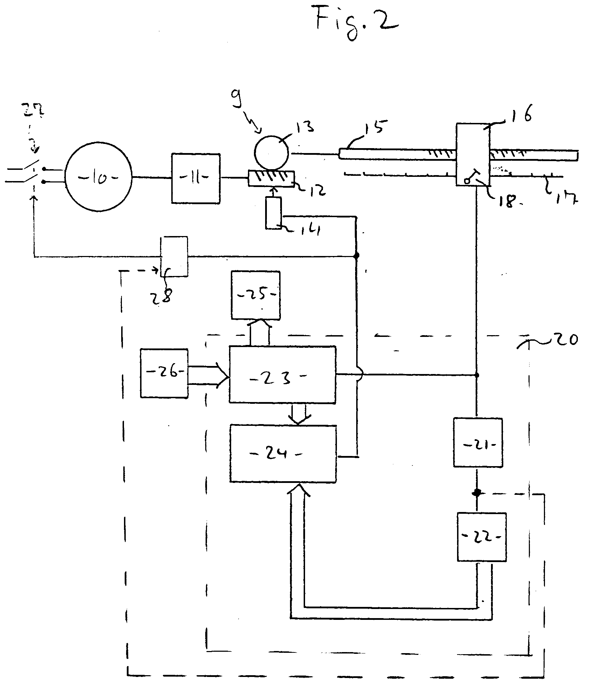

Die in Fig. 2 gezeigte Ausführungsform der Erfindung unterscheidet sich von der nach Fig. 1 dadurch, daß ein Notabschaltsystem vorgesehen ist. Dieses umfaßt in der hier gezeigten Ausführungsform ein Verzögerungsglied 28, das durch das Ausgangssignal des Komparators 24 getriggert wird. Nach Ablauf der im Verzögerungsglied 28 eingestellten Verzögerungszeit gibt das Verzögerungsglied 28 ein Ausgangssignal ab, welches einen Relaisschalter 27 öffnet, über welchen der Antriebsmotor 10 mit Strom versorgt wird. Dadurch wird der Antriebsmotor 10 abgeschaltet und der Werkzeugschlitten 16 bleibt in jedem Fall stehen.

Bei einer bevorzugten Ausführungsform der Erfindung ist die im Verzögerungsglied 28 vorliegende Verzögerungszeit ferneinstellbar. Diese Ferneinstellung erfolgt über eine Signalleitung (in Fig. 2 unterbrochen gezeichnet), die von dem Geschwindigkeitsdetektor 21 zum Verzögerungsglied 28 führt. Bei höheren Schlittengeschwindigkeiten wird dementsprechend eine kürzere Verzögerungszeit eingestellt.

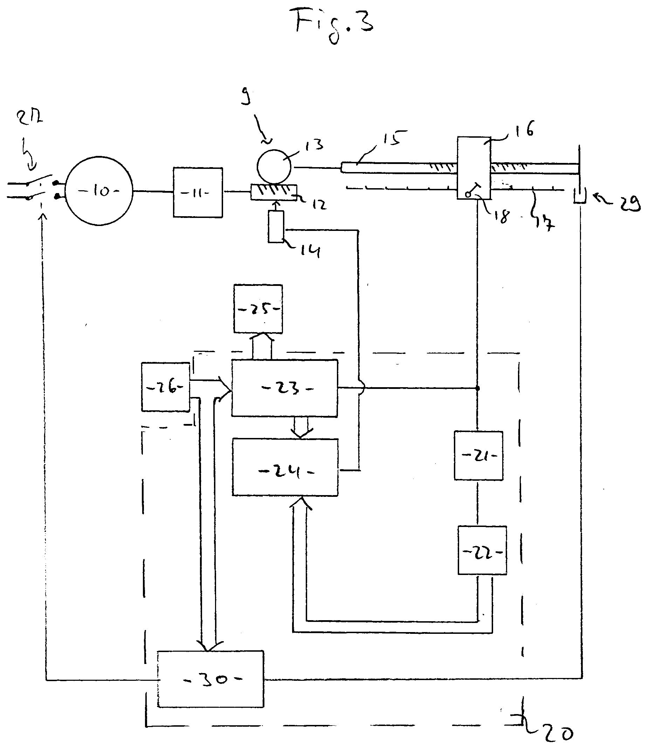

Im folgenden wird anhand der Fig. 3 eine weitere Ausführungsform der Erfindung gezeigt, die sich von den zuvor beschriebenen Ausführungsformen hinsichtlich des soeben erwähnten Notabschaltsystems unterscheidet.

Bei dieser Ausführungsform der Erfindung ist ein Drehmeßfühler 29 vorgesehen, der eine Drehung der Spindel 15 meldet. Das Ausgangssignal des Drehmeßfühlers 29 wird einem Notabschaltrechner 30 zugeführt, der ein Ausgangssignal zum Öffnen des Relais 27 abgeben kann.

Weiterhin wird dem Notabschaltrechner 30 derselbe Sollweg aus der Eingabetastatur 26 zugeführt, welcher dem voreinstellbaren Zähler 23 zugeführt wird.

Wenn bei dieser Ausführungsform der Erfindung die Spindel 15 zu drehen beginnt und der Schlitten 60 damit verschoben wird, so beginnt gleichzeitig der Drehmeßfühler 29 Signale abzugeben. Mit dem ersten Ausgangssignal liegt somit der Zeitpunkt fest, zu welchem die Bewegung des Schlittens 16 begonnen hat.

Aus dem, über die Tastatur 26 eingegebenen Wert errechnet der Notabschaltrechnung 30 die maximale Zeitdauer, die bei der vorliegenden Drehgeschwindigkeit der Spindel 15 (gemessen über den Drehmeßfühler 29) verstreichen darf, bis der voreingestellte Sollweg erreicht ist. Nach Verstreichen der errechneten Zeitdauer überprüft der Notabschaltrechner 30, ob auch der Drehmeßfühler 29 noch eine Drehung der Spindel 15 anzeigt bzw. ob sich die Drehung der Spindel 15 in ihrer Geschwindigkeit verringert. Dreht die Spindel 15 weiter bzw. nicht langsamer, so steuert der Notabschaltrechner 30 das Relais 27 an, so daß der Hauptmotor 10 angehalten wird. Auf diese Weise ist das Notabschaltsystem vollständig unabhängig von der eingangs beschriebenen Vorschubabschaltung, was natürlich die Sicherheit des Systems erheblich steigert.

Für den Fachmann ist es ersichtlich, daß die gesamte Abschaltsteuerung 20 (auch einschließlich des Verzögerungsglieds 28) mittels eines Mikroprozessors bzw. Computers darstellbar ist, woraus sich wiederum ergibt, daß die vorliegende Erfindung nicht nur eine Vorrichtung, sondern auch ein entsprechendes Verfahren betrifft.

Bezugszeichenliste

9    Kupplung
10   Antriebsmotor
11   Getriebe
12   Fallschnecke
13   Schneckenrad
14   Auslöseelement
15   Spindel
16   Werkzeugschlitten
17   Maßstab
18   Meßfühler
20   Abschaltsteuerung
21   Geschwindigkeitsdetektor
22   Vorgabeumwandler
23   Zähler
24   Komparator
25   Anzeige
26   Eingabetastatur
27   Schalter
28   Verzögerungsglied
29   Drehmeßfühler
30   Notabschaltrechner

**Patentansprüche**

1.  Einrichtung zum Abschalten eines Vorschubs bei einer konventionellen Drehmaschine oder Fräse, mit einem Antriebsmotor (10), mit mindestens einer Spindel (15) zum Verschieben eines Werkzeugschlittens (16), mit mindestens einer steuerbaren Kupplung (9) zum Auftrennen der Wirkverbindung zwischen dem Antriebsmotor (10) und der Spindel (15), mit Meßeinrichtungen (17, 18) zum Messen eines vom Werkzeugschlitten (16) zurückgelegten Istweges, mit Eingabeeinrichtungen (26) zum Eingeben eines Sollweges und mit einer Abschaltsteuerung (20), welche die steuerbare Kupplung (9) dann ausrückt, wenn der Istweg dem Sollweg gleicht,

    **dadurch gekennzeichnet**, daß die Abschaltsteuerung (20) einen Geschwindigkeitsdetektor (21) zum Feststellen der Vorschubgeschwindigkeit des Werkzeugschlittens (16) und eine Vorgabeeinrichtung (21, 22, 24) umfaßt, die derart ausgebildet ist, daß die Kupplung (9) eine durch einen Vorgabeumwandler (22) in Abhängigkeit von der Vorschubgeschwindigkeit festgelegten Nachlaufstrekke vor Erreichen des Sollweges ausgerückt wird.

2.  Einrichtung nach Anspruch 1,
    **dadurch gekennzeichnet**, daß der Vorgabeumwandler (22) derart ausgebildet ist, daß die Nachlaufstrecke über einen Proportionalitätsfaktor mit der Vorschubgeschwindigkeit verknüpft ist.

3.  Einrichtung nach Anspruch 2,
    **dadurch gekennzeichnet**, daß der Proportionalitätsfaktor in mindestens zwei Stufen in Abhängigkeit von der Vorschubgeschwindigkeit vorzugsweise selbsttätig einstellbar ist.

4.  Einrichtung nach einem der Ansprüche 2 oder 3,
    **dadurch gekennzeichnet**, daß der Vorgabeumwandler (22) derart ausgebildet ist, daß der Proportionalitätsfaktor in einem Lernvorgang anhand eines Probevorschubs mit definierter Vorschubgeschwindigkeit feststellbar und für eine weitere Verwendung speicherbar ist.

**5.** Einrichtung nach einem der vorhergehenden Ansprüche,

**dadurch gekennzeichnet**, daß der Vorgabeumwandler (22) Speichereinrichtungen aufweist, in welchen eine Vielzahl von Proportionalitätsfaktoren in Abhängigkeit von der Vorschubgeschwindigkeit wieder auslesbar speicherbar ist.

**6.** Einrichtung nach einem der vorhergehenden Ansprüche,

**dadurch gekennzeichnet**, daß eine Notabschalteinrichtung (27 - 30) vorgesehen ist, die derart ausgebildet ist, daß dann, wenn die Kupplung (9) eine definierte Zeitdauer (T) nach Erreichen des Sollweges nicht ausgerückt ist, der Antriebsmotor (10) abgeschaltet wird.

**7.** Einrichtung nach Anspruch 6,

**dadurch gekennzeichnet**, daß die Notabschalteinrichtung ein Verzögerungsglied (28) umfaßt, daß dann, wenn der Istweg dem Sollweg entspricht, zu laufen beginnt und bei Ablauf einer festgesetzten Verzögerungszeit den Antriebsmotor (10) abschaltet.

**8.** Einrichtung nach Anspruch 6,

**dadurch gekennzeichnet**, daß die Notabschalteinrichtung eine Vorschubabtasteinrichtung (29) umfaßt, die unabhängig von der Meßeinrichtung (17, 18) eine Bewegung des Werkzeugschlittens (16) feststellt.

**9.** Einrichtung nach Anspruch 8,

**dadurch gekennzeichnet**, daß die Notabschalteinrichtung einen Notabschaltrechner (30) umfaßt, der mit der Vorschubabtasteinrichtung (29) und der Eingabeeinrichtung (26) verbunden und derart ausgebildet ist, daß aus der Bewegungsgeschwindigkeit des Werkzeugschlittens (16) und dem eingegeben Sollweg eine Maximal-Vorschubzeitdauer errechnet wird, und der Antriebsmotor dann abgeschaltet wird, wenn die Vorschubabtasteinrichtung (29) nach Ablauf der Maximal-Vorschubdauer noch eine Bewegung des Werkzeugschlittens (16) feststellt.

Fig. 1

Fig.2

Fig.3